# EUROPÄISCHE PATENTANMELDUNG

(11) **EP 2 485 027 A1**
(43) Veröffentlichungstag der Anmeldung: **08.08.2012**
(21) Anmeldenummer: 12154029.8
(22) Anmeldetag: 06.02.2012
(51) Int. Cl.: G01L 5/06

(54) **Vorrichtung zur Prüfung der Spannkraft eines Gurtbandes, insbesondere eines flachen Zurrgurtes**

(30) Priorität: 06.02.2011 DE 102011010574; 27.05.2011 DE 202011050268 U
(71) Anmelder: Ruthenbeck GmbH, 58675 Hemer (DE)
(72) Erfinder: Salomon, Thomas, D-33415 Verl (DE)
(74) Vertreter: Haverkamp, Jens

(57) **Zusammenfassung**

Eine Vorrichtung 1 dient zur Prüfung der Spannkraft eines Gurtbandes 2, insbesondere eines flachen Zurrgurtes. Die Vorrichtung 1 verfügt über quer zur Längsachse des Gurtbandes 2 angeordnete, zueinander beabstandete Führungen 3 für eine Auflage des Gurtbandes während der Prüfung. Zwischen den Führungen 3 befindet sich ein durch eine Prüfkraft für die Zwecke einer Gurtspannprüfung beaufschlagtes Auslenkelement 4 zum Erzeugen einer kraftproportionalen Auslenkung des Gurtbandes 2 aus seiner vor der Prüfung gestreckten Konfiguration. Ferner umfasst die Vorrichtung 1 eine Messeinrichtung 5, die die erzeugte kraftproportionale Auslenkung erfasst und die Auslenkung oder einen daraus abgeleiteten Kraft- und/oder Spannungswert des Gurtbandes 2 anzeigt. Das Auslenkelement 4 ist als Schwenkhebel ausgebildet, der von einer Verstelleinrichtung 8, 20 aus seiner Ausgangslage derart verstellbar ist, dass er das Gurtband 2 einseitig belastet und eine kraftproportionale Auslenkung des Gurtbandes 2 erzeugt. Gegenüberliegend zu dem Schwenkhebel 4 ist eine Messeinrichtung 5 angeordnet, die auf der zu der Anlage des Schwenkhebels 4 gegenüberliegenden Seite an dem Gurtband 2 anliegt und das Maß der kraftproportionalen Auslenkung erfasst und an eine mit ihr gekoppelte Anzeigevorrichtung 6, 7 weiterleitet.

## Beschreibung

Die Erfindung betrifft eine Vorrichtung zur Prüfung der Spannkraft eines Gurtbandes, insbesondere eines flachen Zurrgurtes gemäß dem Oberbegriff des Anspruches 1.

Die Prüfung der Spannkraft von Gurtbändern und insbesondere von Zurrgurten ist für die Sicherheit von Transporten von hoher Wichtigkeit. So werden zum Beispiel viele Güter mittels Lkw oder Eisenbahn transportiert und dabei auf der Ladefläche des Lkw oder des Güterwaggons mittels Zurrgurten verspannt. Damit die Ladung auch bei unvorhergesehenen Fahrbewegungen oder auch bei unbeabsichtigt heftigen Bremsmanövern, welche beispielsweise im Straßenverkehr nicht ausschließbar sind, immer sicher auf der Ladefläche gehalten ist, müssen die Zurrgurte mit entsprechenden Spannkräften die Ladung fixieren und damit ein Verrutschen der Ladung verhindern. Dabei dürfen je nach Ladung unterschiedliche Spannkräfte in den Zurrgurten nicht unterschritten werden. Gleichzeitig ist es aus Gründen der Sicherheit auch auf jeden Fall zu vermeiden, dass die Zurrgurte zu fest angezogen und damit mit Spannkräften belastet werden, die oberhalb der zulässigen Spannungen liegen.

Da im rauen Transportbetrieb häufig das Sichern der Ladung von nur wenig oder gar nicht ausgebildeten Kräften vorgenommen wird, kommt es nicht selten vor, dass die Ladungssicherung unfachmännisch ausgeführt wird. Entweder werden die Zurrgurte mit einer zu geringen Spannkraft angezogen und damit ist die Ladung nicht hinreichend gesichert, oder es kommen beim Verspannen der Zurrgurte bei der Betätigung der üblicherweise als Ratschen ausgebildetem Gurtschlösser Stangen oder dergleichen hebelartige Einrichtungen zum Einsatz, durch die die Zurrgurte schnell überlastet werden und damit die zulässigen Spannkräfte bis in den Bereich der plastischen Verformung erhöht werden. Auch hierdurch wird die Ladung nicht wirklich gesichert, da bei entsprechenden Fahrmanövern die notwendigen Sicherheiten aufgrund der Materialkennwerte der Zurrgurte überschritten werden. Hierdurch sind schon eine Vielzahl von schlimmen Unfällen hervorgerufen worden.

Wesentliche Aufgabe der Spanngurte ist bei der Ladungssicherung die Erzeugung einer ausreichend hohen Haftreibung zwischen dem zu sichernden Gut und der Ladefläche, die durch die Erhöhung der senkrecht auf die Ladefläche wirkenden Normalkraft infolge der Verspannung der Zurrgurte bewirkt werden kann. Hierbei ist allerdings nach dem Ausführen eines Spannvorgangs die Spannkraft im Gurt nicht statisch konstant, sondern kann sich durch ein Setzen der Gurte nach dem Spannen sowie aufgrund von Bewegungen des zu sichernden Gutes während des Transportes wieder verändern. So können z.B. durch Umlenkungen des Spanngurtes an den Auflagestellen an dem zu sichernden Gut innerhalb desselben Spanngurtes nach einem Spannen unterschiedliche Spannkräfte in einzelnen Abschnitten des Spanngurtes auftreten. Auch können durch Kippbewegungen des zu sichernden Gutes während des Transportes Spannungsspitzen in dem Material des Spanngurtes hervorgerufen werden, etwa an Auflager- oder Umlenkungsstellen des Spanngurtes beim Kontakt mit dem zu sichernden Gut.

Es ist daher wünschenswert, dass nach der Sicherung der Ladung auf einfache Weise die genaue Spannkraft und damit eine Zugspannung der Gurtbänder überprüft werden kann, um sicherzustellen, dass die zulässigen Werte eingehalten werden. Es ist beispielsweise aus der DE 197 39 667 B4 eine Vorrichtung zum Erfassen der Bandspannung eines Gurtbandes bekannt, bei der die Prüfvorrichtung seitlich auf das Gurtband aufgeschoben und das Gurtband zwischen zwei Auflagerführungen und einem Belastungsstempel gehalten wird. Durch eine federbelastete Aufbringung einer Prüfkraft durch Umstellen eines Handhebels wird eine spannungsproportionale Auslenkung des Gurtbandes hervorgerufen, die dabei gemessen und auf einer Skala angezeigt werden kann. Durch entsprechende Markierungen sind auf der Skala die zulässigen Spannungswerte für den Benutzer einfach ablesbar und damit ist einfach festzustellen, ob die jeweils vorliegende Gurtspannung in den zulässigen Grenzwerten liegt. Nachteilig an dieser Vorrichtung ist allerdings, dass diese Vorrichtung mit zwei Händen bedient werden muss, um den Prüfhebel umzulegen, und dass die Baugröße der Vorrichtung eine Prüfung von Spanngurten bei beengten Verhältnissen hinsichtlich der Zugänglichkeit des Spanngurtes nicht erlaubt. Zudem lassen sich mit dieser Vorrichtung durchaus häufig vorhandene Dickentoleranzen der Spanngurte wie etwa von vorgereckten Spanngurten nicht erfassen und führen zu Fehlmessungen.

Aufgabe der vorliegenden Erfindung ist es daher, eine gattungsgemäße Vorrichtung derart weiterzuentwickeln, dass eine einfache Prüfung der Spannung von Spanngurten und insbesondere von Zurrgurten auch in beengten Platzverhältnissen und manuell einfach sowie mit hoher Genauigkeit durchführbar ist.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Demnach wird eine derartige gattungsgemäße Vorrichtung dadurch in erfindungsgemäßer Weise weiter entwickelt, dass das Auslenkelement als Schwenkhebel ausgebildet ist, der von einer Verstelleinrichtung aus seiner Ausgangslage derart verstellbar ist, dass er das Gurtband einseitig belastet und eine kraftproportionale Auslenkung des Gurtbandes erzeugt, und gegenüberliegend zu dem Schwenkhebel eine Messeinrichtung angeordnet ist, die auf der zu der Anlage des Schwenkhebels gegenüberliegenden Seite an dem Gurtband anliegt und das Maß der kraftproportionalen Auslenkung erfasst und an eine mit ihr gekoppelte Anzeigevorrichtung weiter leitet. Durch diese Anordnung des Schwenkhebels und der Messeinrichtung als verschwenkbare Einheiten ist es möglich, das Gurtband im wesentlichen von der Seite zwischen dem Schwenkhebel und der Messeinrichtung aufzunehmen und dabei die Betätigung der Vorrichtung ebenfalls von seitlich des Gurtbandes vorzunehmen. Damit ist die Zugänglichkeit der jeweiligen Messstelle des Gurtbandes auch bei beengten Platzverhältnissen günstig gelöst und damit kann die Messung auch bei derartigen beengten Platzverhältnissen einfach durchgeführt werden. Der Schwenkhebel und die Messeinrichtung nehmen dazu das Gurtband zwischen sich auf, wobei die Verschwenkung des Schwenkhebels die kraftproportionale Auslenkung des Gurtbandes hervorruft und diese Auslenkung dann direkt wiederum von der Messeinrichtung erfasst werden kann. Da der Schwenkhebel und die schwenkbare Messeinrichtung das Gurtband bei der Prüfung berührend zwischen sich aufnehmen, werden Effekte aufgrund unterschiedlicher Dicken des Gurtbandes oder seiner relativen Lage zu den Messstellen weitgehend kompensiert und damit die Messung der tatsächlich vorliegenden Spannkraft des Gurtbandes verbessert. Eventuell vorliegende Dickentoleranzen des Spanngurtes werden durch die unterseitige Anlage der schwenkbaren Messeinrichtung von allein kompensiert und gehen daher nicht in die Messung ein. Hierdurch wird eine bedienungsfreundliche, sichere und genaue Erfassung der jeweils vorliegenden Gurtkraft bzw. einer daraus ableitbaren Gurtspannung erreicht, die schnell durchgeführt werden kann und damit vom Bedienpersonal nicht als umständlich angesehen und entsprechend häufig nicht durchgeführt wird. Dies kommt insgesamt der Sicherheit beim Transport von Ladungen zugute, wodurch schwere Unfälle verhindert werden können.

In einer ersten vorteilhaften Ausgestaltung ist es denkbar, dass der Schwenkhebel bei der Prüfung das Gurtband über die Verstelleinrichtung mit der Kraft einer Messfeder als Prüfkraft definiert belastet und die kraftproportionale Auslenkung des Gurtbandes über die Federkraft der Messfeder vorgebbar ist. Hierdurch wird vermieden, dass ein Benutzer mit jeweils unterschiedlicher Kraft das Gurtband belastet und damit unterschiedliche Messergebnisse hervorruft oder dass unterschiedliche Benutzer unterschiedliche Messergebnisse erhalten. Die bei einer Verwendung einer genormten Messfeder immer gleich bleibende oder auch vorab kalibrierbare Einstellung der Messfeder sorgt für gleich bleibende Andruckverhältnisse des Schwenkhebels an dem Gurtband und damit auch eine gleich bleibende Ausgangslage zur Erzeugung der kraftproportionalen Auslenkung des Gurtbandes. Dies bewirkt gleichmäßige und von der jeweiligen Bedienperson unabhängige Messwerte bei der Bestimmung der Spannkraft des Gurtbandes und trägt damit zur Vereinheitlichung und Sicherung der Messergebnisse bei. Auch der Einsatz anderer Prüfkräfte ist denkbar, wie beispielsweise einer Gasdruckfeder.

Für den typischerweise rauen Betrieb bei der Vornahme der Ladungssicherung ist es von Vorteil, wenn die Messfeder justierbar in Bezug auf eine definierte Vorspannung innerhalb der Vorrichtung angeordnet ist. Eine Justierbarkeit bzw. Kalibrierbarkeit der Messfeder erlaubt es, bei im rauen Betrieb nicht ganz auszuschließenden Veränderungen der Kraft der Messfeder entsprechende nachträgliche Einstellungen der Kraftwirkung vorzunehmen und damit die Vorrichtung zur Einhaltung entsprechender Toleranzwerte und zur Überprüfung ihrer korrekten Funktion zu korrigieren. Die Aufnahme der Messfeder innerhalb der Vorrichtung und möglichst ohne unzulässige mechanische Beeinflussung der Feder vermeidet etwa durch Stöße oder Schläge verursachte Veränderungen der Vorspannkraft der Messfeder und trägt daher zu einem langdauernden Betrieb der Vorrichtung ohne die Notwendigkeit ständiger Kalibrierungen bei. Eine Kalibrierung kann beispielsweise durch eine Relativverschiebung zwischen der Messeinrichtung und der Anzeigeeinrichtung erfolgen. Selbstverständlich ist es auch möglich, als Normteile verfügbare Standard-Meßfedern zum Einsatz zu bringen, deren Spannungsverhalten in Abhängigkeit bekannt ist und in engen Toleranzen gleich bleibt. Hierdurch kann eine entsprechende Kalibrierung der Messfeder überflüssig gemacht werden.

Insbesondere im Hinblick auf die einfache Betätigung der Vorrichtung ist es von Vorteil, wenn der Schwenkhebel über einen Handhebel der Verstelleinrichtung aus der von der Messfeder betätigten, das Gurtband auslenkenden Stellung in eine neutrale Ausgangsstellung zurückholbar ist. Vor allem, wenn in weiterer Ausgestaltung der Handhebel und das Gehäuse der Vorrichtung eine zangenartig zueinander verstellbare Anordnung bilden, kann die Vorrichtung bei der Prüfung mit einer Hand betätigt werden und damit zum einen eine gute Zugänglichkeit der Prüfstelle an dem Spanngurt gewährleistet sein und zum anderen die Ausführung der Prüfung ergonomisch mit nur einer Hand ermöglicht werden. Dies fördert die Akzeptanz bei dem Bedienungspersonal und damit die Wahrscheinlichkeit, dass die Prüfung auch tatsächlich jedes Mal im Rahmen der Ladungssicherung durchgeführt wird.

Hierbei kann in weiterer Ausgestaltung die Vorrichtung beim Einlegen des Gurtbandes mit dem Handhebel öffenbar und, vorzugsweise in geöffneter Stellung verriegelbar, sein und sich bei Prüfung unter der Wirkung der Feder schließen. Die Verriegelungsmöglichkeit in geöffneter Stellung ermöglicht es, auch ohne Handbetätigung die Vorrichtung an die gewünschte Messstelle des Spanngurtes zu bringen und erst dann die Verriegelung zu lösen, woraufhin der Schwenkhebel und die Messeinrichtung an dem Spanngurt zur Anlage kommen.

Weiterhin lässt sich die Bestimmung der Gurtspannung dadurch verbessern und vereinheitlichen, dass der Schwenkhebel eine selbsteinstellende Auflage an dem Gurtband aufweist, vorzugsweise einen drehbar an dem Schwenkhebel gelagerten und sich an die Auflagefläche des Gurtbandes ausrichtenden Amboss. Eine derartige selbsteinstellende Auflage sorgt für weitgehend unabhängig von der jeweiligen Gurtgeometrie oder der relativen Lage des Gurtes zu den Führungen unabhängige Aufbringung der Prüfkraft durch den Schwenkhebel und damit zu gleichmäßigen Verhältnissen bei der Bestimmung der Auslenkung des Spanngurtes.

Dem rauen Betrieb im Hinblick auf die Durchführung von Ladungssicherungsmaßnahmen Rechnung tragend ist es von Vorteil, wenn im wesentlichen alle bewegten Teile der Vorrichtung innerhalb des, vorzugsweise aus plattenartig zueinander beabstandeten Halbschalen gebildeten Gehäuses aufgenommen sind. Das Gehäuse kapselt dabei im wesentlichen alle beweglichen Teile der Vorrichtung, insbesondere die Betätigung des Schwenkhebels und die Mechanik zur Anzeige der Messwerte, so dass diese auch bei nicht meßüblicher Benutzung der Vorrichtung geschützt innerhalb des Gehäuses aufgenommen sind. So kann beispielsweise auch die Messfeder in dem dem Handhebel zugeordneten, handgriffartigen Gehäuseabschnitt aufgenommen sein, wodurch unzulässige Kräfte auf die Messfeder vermieden werden können. Denkbar ist selbstverständlich neben einem grundsätzlich plattenartigen Aufbau des Gehäuses, wenn dieses schalenartig z.B. aus speziellen Kunststoffhalbschalen oder Druckgusshalbschalen gebildet wird.

Von Vorteil ist es weiterhin, wenn die Messeinrichtung ebenfalls schwenkbar ausgebildet ist und über eine Rückstellfeder in eine Ausgangslage rückstellbar ist. Die Messeinrichtung wird hierbei typischerweise aus passiv beweglichen Gelenken ausgebildet, die nur aufgrund der kraftproportionalen Auslenkung des Spanngurtes betätigt wird und die Anzeige des erreichten Spannkraftwertes realisiert. Zur Vermeidung zusätzlicher Bedienungshandgriffe für eine Rückstellung der Messeinrichtung kann diese etwa über eine Rückholfeder in eine Ausgangslage zurückgeführt werden, nachdem die Messung beendet ist, wodurch die Benutzung der Vorrichtung insgesamt vereinfacht und die Beschädigung der Messeinrichtung beim Einlegen eines weiteren Gurtbandes vermieden wird.

Hierbei ist es in weiterer Ausgestaltung denkbar, dass die Messeinrichtung die erfasste Auslenkung über eine Anzeigemechanik, vorzugsweise über Schwenkhebel, weiter leitet, wobei vorzugsweise mindestens eine Übersetzung zur Vergrößerung der Anzeigeempfindlichkeit vorgesehen ist. Durch die Übertragung der gemessenen kraftproportionalen Auslenkung des Spanngurtes durch den Schwenkhebel allein über eine mechanische Anzeigemechanik funktioniert die Vorrichtung ohne jede Notwendigkeit einer elektrischen Hilfsenergie oder dergleichen, so dass die Vorrichtung jederzeit einsatzbereit etwa bei einem Lkw vorgehalten werden kann und durch die Übersetzung der gemessenen Auslenkung gleichwohl eine gute Ablesbarkeit des ermittelten Kraftwertes gewährleistet ist.

Hierbei kann in weiterer konkreter Ausgestaltung die Anzeigemechanik eine Skala und einen Zeiger, vorzugsweise einen Schleppzeiger aufweisen, die die erfasste spannungsproportionale Auslenkung des Gurtbandes als Kraftwert, vorzugsweise auf einer Skala mit Anzeigefeldern für zulässige und unzulässige Belastungen des Gurtbandes anzeigen. Somit ist zum einen für den Bediener ohne die Notwendigkeit genauer Ablesung unmittelbar erkennbar, ob die gemessene Spannkraft innerhalb der tolerierbaren Grenzwerte liegt und bei Verwendung eines Schleppzeigers dieses Ergebnis auch noch nach Beendigung der eigentlichen Messung ablesbar. Durch entsprechende Übersetzung der mechanischen Anzeige und eine großzügige Aufteilung der verwendeten Skala kann eine sehr fein gestufte Anzeige der gemessenen Spannkraft erreicht werden.

In einer anderen Ausgestaltung ist es auch denkbar, dass die Messeinrichtung die erfasste Auslenkung über einen elektrischen Sensor erfasst und elektrisch an eine Anzeigeeinrichtung, vorzugsweise eine Digitalanzeige oder dgl. weiter leitet. Durch die elektrische und vorzugsweise digitale Erfassung der Auslenkung etwa über einen Drehgeber oder dgl. ist ein vereinfachter Aufbau der Anzeigefunktion der Vorrichtung möglich, wobei neben einer digitalen Anzeige z.B. auch über eine entsprechende Schnittstelle eine digitale Protokollierung der erfassten Spannkräfte vereinfacht und ggf. automatisiert werden kann. Dies kann etwa für die Dokumentation gegenüber Kontrollbehörden wie etwa der Polizei bei Fahrzeugkontrollen von Interesse sein und vereinfacht den Nachweis einer ordnungsgemäßen Ladungssicherung.

Zur vereinfachten Benutzung der Messeinrichtung trägt auch bei, wenn die Betätigungskräfte der Messeinrichtung im Bereich üblicher Handkräfte angesiedelt werden kann. Hierzu trägt eine mechanische Übersetzung der Betätigungskraft der zangenartigen Messeinrichtung bei, die gegen die Kraft der Messfeder vor der Ausführung der Messung erforderlich ist, bei. Durch die Einhaltung der üblichen Handkräfte infolge einer zwischengeschalteten mechanischen Übersetzung kann die Betätigung der Messeinrichtung weitgehend unabhängig von der zur Messung erforderlichen, durchaus gegenüber der Handkräfte relativ höheren Druckkraft erfolgen, die allein durch die Messfeder aufgebracht wird.

Da in der Praxis unterschiedliche Gurtbreiten Verwendung finden, ist das von Vorteil, wenn die Führungen zur Auflage des Gurtbandes als relativ zum Gurtband verdrehbare Bolzen mit jeweils definierten Anlageflächen für verschiedene Gurtbreiten ausgebildet sind. Hierdurch kann mit nur einer Vorrichtung eine Anzahl von unterschiedlichen Gurtbreiten gemessen werden, wobei durch die in definierten Anlageflächen der zum Beispiel verdrehbar ausgestalteten Bolzen jeweils eine genaue, z.B. zentrische Zuordnung des Gurtbandes zu dem Schwenkhebel und zu der Messeinrichtung und damit eine hohe Genauigkeit der Messung gewährleistet wird.

Für die Benutzung und auch für das Verstauen der Vorrichtung ist es von Vorteil, wenn die Führungen in einer Führungseinheit, vorzugsweise von der Vorrichtung abnehmbar, gehaltert sind. Hierdurch kann die quer zu der eigentlichen Erstreckung der Vorrichtung angeordnete Führungseinheit mit den voneinander beanstandeten Führungen von der Vorrichtung abgenommen und Platz sparend beispielsweise in einem Koffer oder einer Tasche gelagert werden, ohne dass zu große Packmaße der gesamten Vorrichtung hervorgerufen werden.

Eine besonders bevorzugte Ausführungsform der erfindungsgemäßen Vorrichtung zeigt die Zeichnung. Es zeigen:
- **Fig. 1:**: eine perspektivische Ansicht der erfindungsgemäßen Vor- richtung im montierten Zustand und angedeuteter Lage eines Gurtbandes,
- **Fig. 2:**: die Ansicht der erfindungsgemäßen Vorrichtung gemäß Figur 1 im teildemontierten Zustand unter Weglassung von Gehäuseteilen,
- **Fig. 3:**: eine ebene Seitenansicht der erfindungsgemäßen Vorrichtung gemäß Figur 2,
- **Fig. 4:**: eine ebene Seitenansicht der erfindungsgemäßen Vorrichtung gemäß Figur 1,
- **Fig. 5:**: eine perspektivische Ansicht der erfindungsgemäßen Vorrichtung gemäß Figur 1 mit demontierter Führungseinheit,
- **Fig. 6:**: eine denkbare Ausgestaltung einer Skalenanzeige der erfindungsgemäßen Vorrichtung im Hinblick auf die Bereiche korrekter Gurtspannkräfte für unterschiedliche Gurtbreiten
- **Fig. 7:**: eine perspektivische Ansicht der erfindungsgemäßen Vorrichtung gemäß einem weiteren Ausführungsbeispiel,
- **Fig. 8:**: die Vorrichtung der Figur 7 mit einigen Teilen nach Art einer Explosionsdarstellung voneinander gelöst,
- **Fig. 9:**: eine perspektivische Ansicht der Vorrichtung der Figur 7 mit dem gegenüber der Messposition verschwenkten Gurtauflageschlitten und
- **Fig. 10:**: einen Längsschnitt durch die Vorrichtung der Figur 7.

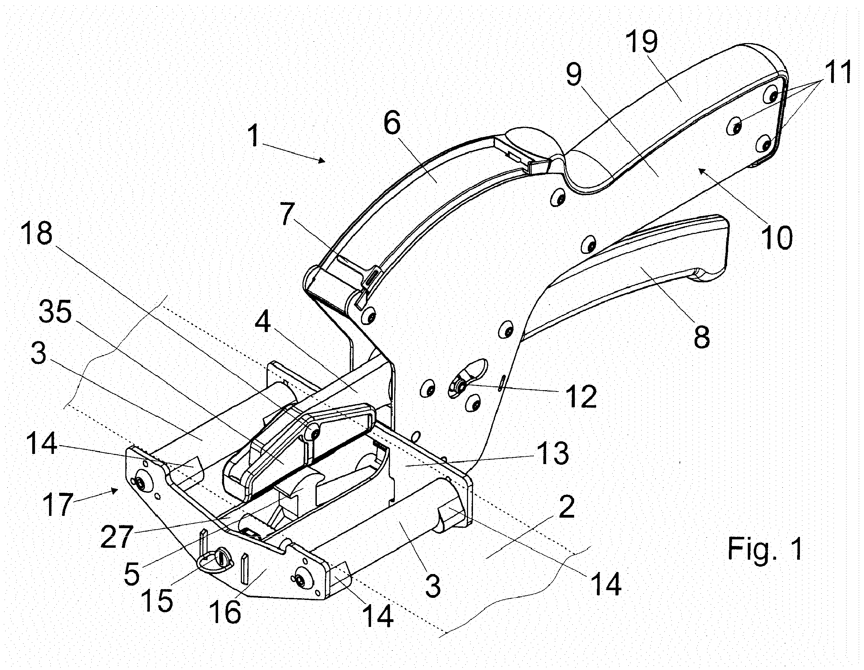

In der Figur 1 ist eine räumliche Ansicht der erfindungsgemäßen zangenartig aufgebauten Vorrichtung 1 im montierten Zustand und angedeuteter Lage eines Gurtbandes 2 zu erkennen, wobei mithilfe der Vorrichtung 1 die Spannung des Gurtbandes 2 in grundsätzlich bekannter Weise durch Erzeugen einer kraftproportionalen Auslenkung mithilfe des Schwenkhebels 4 und einer insgesamt als Messeinrichtung 5 bezeichneten mechanischen Einrichtung vorgenommen werden kann. Hierzu wird das Gurtband 2 über zwei Führungen 3 unter Positionierung, hierbei vorwiegend einer Zentrierung mittels Anschlägen 14 zwischen den oberseitig in der Figur 1 angeordneten Schwenkhebel 4 und die Messeinrichtung 5 positioniert und mit dem Schwenkhebel 4 eine Druckkraft so auf das Gurtband 2 aufgebracht, dass das Gurtband 2 sich zur Spannkraft proportional verformt. Durch die zur Spannkraft proportionale Verformung wird in grundsätzlich bekannter Weise die auf das Gurtband 2 wirkende Zugkraft bzw. eine daraus ableitbare Zugspannung ermittelt, die durch das Verspannen des Gurtbandes 2 auf einen etwa mit dem Gurtband 2 fixierten, hier nicht weiter dargestellten Gegenstand ausgeübt wird.

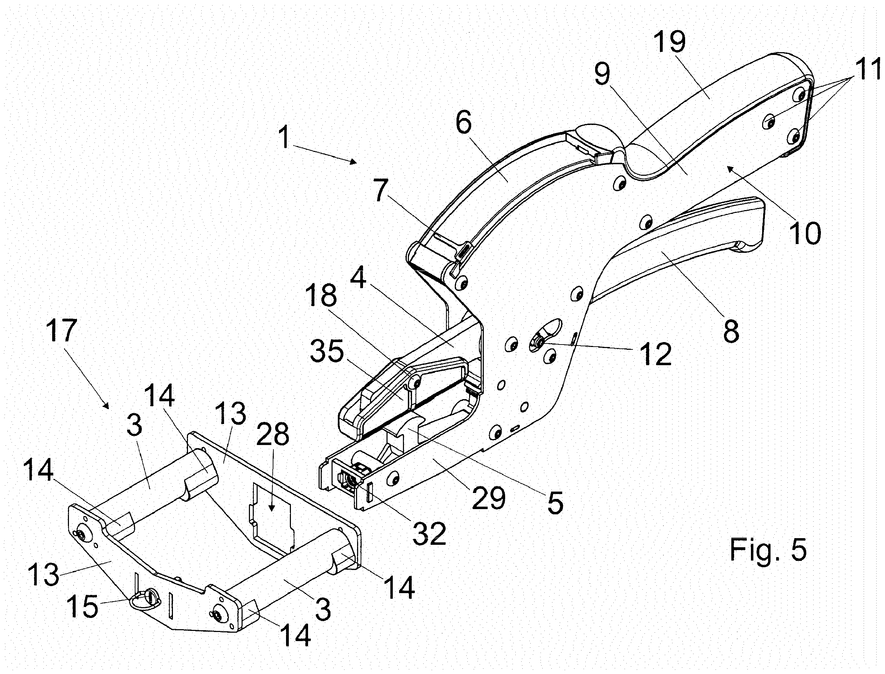

Das Gurtband 2 wird dabei in einer Führungseinheit 17 über die an beiden Enden 10 der Führungseinheit 17 angeordneten Führungen 3 in Form von grundsätzlich kreisförmigen Bolzen geführt und in Längsrichtung der Bolzen über die Anschläge 14 relativ zu dem Schwenkhebel 4 und der Messeinrichtung 5 positioniert bzw. zentriert zu der Messeinrichtung ausgerichtet. Dabei können die Bolzen der Führungen 3 relativ zu der Führungseinheit 17 verdreht werden, um unterschiedliche Breiten des Gurtbandes 2 korrekt in der Führungseinheit 17 zu positionieren. Die Führungen 3 sind dabei über Drehachsen zwischen zwei Stegen 13, 16 gehaltert, wobei die Stege wiederum über Versteifungen 27 aneinander festgelegt sind. Die Führungseinheit 17 kann, wie insbesondere aus der Figur 5 näher entnommen werden kann und dort noch genauer beschrieben ist, von dem Rest der zangenartigen Vorrichtung 1 abgenommen und separat gelagert werden.

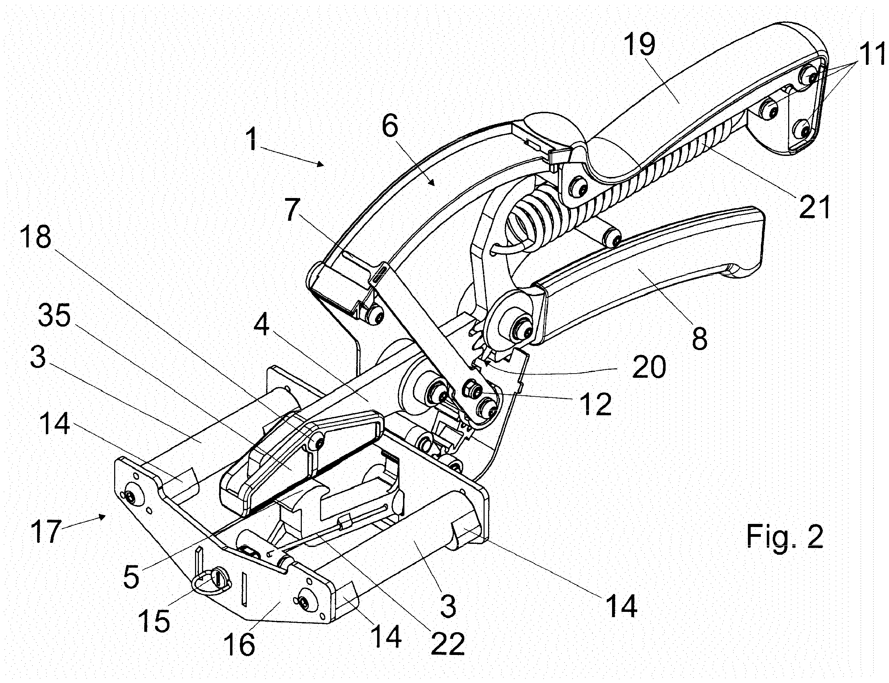

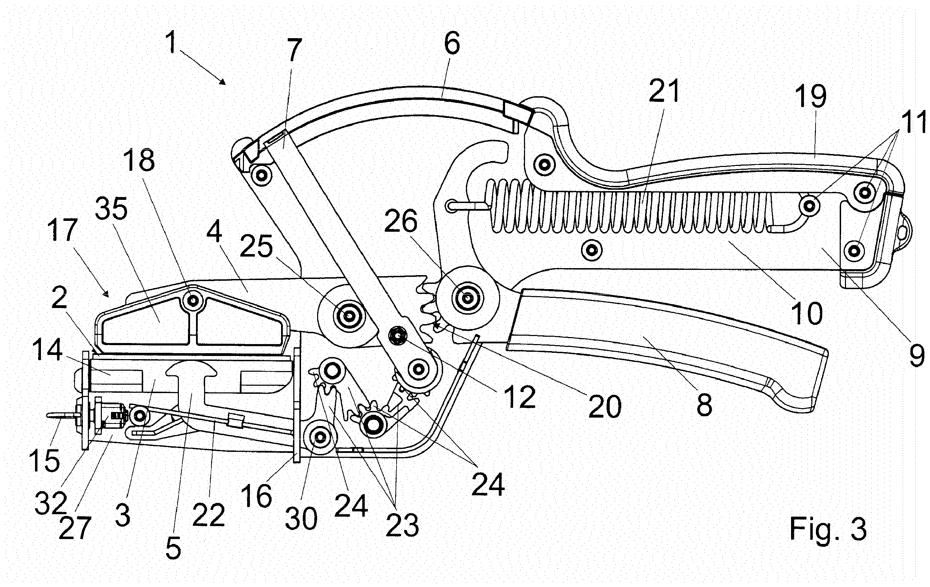

Wie insbesondere unter Bezugnahme auf die Figuren 1 bis 3 genauer zu erkennen ist, handelt es sich bei der Verstellung des Schwenkhebels 4 sowie um die Betätigung der Messeinrichtung 5 um ein mechanisches System aus drehbar gelagerten Hebeln 8, 23 und die Hebel 8, 23 miteinander verbindenden Antrieben 20, 24, durch die zum einen der Schwenkhebel 4 in seiner Lage relativ zu dem Gurtband 2 verlagert werden kann und zum anderen die erzeugte kraftproportionale Auslenkung des Gurtbandes 2 gemessen und auf die Skala 6 mit dem Zeiger 7 übertragen werden kann.

Die Aufbringung der Meßkraft des Schwenkhebels 4 erfolgt hierbei über eine Messfeder 21, die an einem Ende eines L-förmig ausgebildeten und in einer Lagerung 26 drehbar gelagerten Handhebels 8 angreift und diesen Handhebel 8 in den Darstellungen der Figuren 1-3 in eine ausgefahrene Stellung nach unten verlagert. Hierdurch wird über den zahnförmig ausgebildeten Antrieb 20 zwischen dem Handhebel 8 und dem handhebelseitigen Ende des Schwenkhebels 4 der ebenfalls in einer Drehlagerung 25 gelagerte Schwenkhebel 4 nach unten auf das Gurtband 2 gedrückt und lenkt dieses Gurtband 2 kraftproportional aus. Zur Gewährleistung einer guten und gleichmäßigen Anlage des Schwenkhebels 4 an dem Gurtband 2 ist am anderen Ende des Schwenkhebels 4 und dem Gurtband 2 zugeordnet ein ambossförmiger Anschlag 35 drehbar über eine Achse 18 an dem Schwenkhebel 4 festgelegt, der für eine immer über die Breite des Gurtbandes 2 gleichmäßige Anpressung des Schwenkhebels 4 an das Gurtband 2 sorgt und damit gleich bleibende Andruckverhältnisse zwischen Schwenkhebel 4 und Gurtband 2 hervorruft. Die Kraft zur Anpressung des Schwenkhebels 4 beziehungsweise des Anschlages 35 an das Gurtband 2 wird hierbei während der Messung allein über die Messfeder 21 aufgebracht, die in dem Gehäuse 9 der Vorrichtung 1 in definierter Weise angeordnet ist und mit einer entsprechenden Vorspannung an dem L-förmigen Handhebel 8 zieht.

Unterhalb des Anschlages 35 und des Gurtbandes 2 ist die Messeinrichtung 5 zu erkennen, die unterseitig in Kontakt mit dem Gurtband 2 steht und durch die spannungsproportionale Auslenkung aufgrund der Kraft des Schwenkhebels 4 ebenfalls ausgelenkt wird. Die Messeinrichtung 5 besteht hierbei aus einem etwa U-förmig gebogenen Hebel 31, der in einer Drehlagerung 30 drehbar in dem Gehäuse 9 gehalten ist und dessen Schwenkbewegung über mehrere hintereinander geschaltete Übertragungshebel 23 mit dazwischen angeordneten Zahntrieben 24 auf einen ebenfalls drehbar gelagerten Zeiger 7 übertragen wird, der sich relativ zu einer Skala 6 verdrehen kann. Eine Verdrehung des U-förmig gebogenen Hebels 31 der Messeinrichtung 5 wird dabei in eine Schwenkbewegung des Zeigers 7 umgewandelt, wobei durch die Hebelübersetzung der Übertragungshebel 23 und die Übersetzung der Antriebe 24 schon bei geringen Auslenkungen des U-förmig gebogenen Hebels 31 eine relativ große Verschwenkung des Zeigers 7 resultiert. Damit ist gewährleistet, dass auch geringere spannungsproportionale Auslenkungen eine deutliche Anzeige des Zeigers 7 auf der Skala 6 hervorrufen.

Eine genaue Justierung der Anzeige des Zeigers 7 erfolgt hierbei über eine Einstellschraube 12. Nach einem Meßdurchgang kann der U-förmig gebogenen Hebel 31 durch eine Rückstellfeder 22 wieder in seine an dem Gurtband 2, ohne Verformung des Gurtbandes 2 anliegende Lage automatisch zurückgestellt werden, wodurch auch der Zeiger 7 wieder in die Nullstellung zurückgeht.

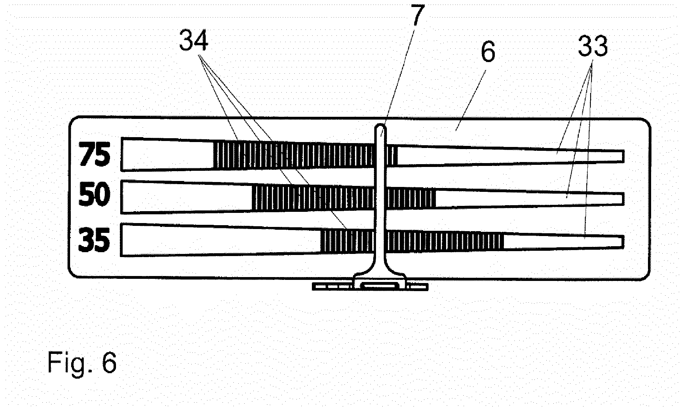

Ein Meßablauf mit der erfindungsgemäßen zangenartigen Vorrichtung 1 lässt sich dabei wie folgt beschreiben. Der Benutzer der Vorrichtung 1 wird die Vorrichtung 1 mit ihrem zangenartig ausgebildeten Abschnitt 10 mit der Griffabdeckung 19 und dem Handhebel 8 in die Hand nehmen und durch Betätigen des Handhebels 8 den Schwenkhebel 4 gegen die Kraft der Messfeder 21 in eine geöffnete Stellung bringen in der die Vorrichtung 1 einem verspannten Gurtband 2 zugeordnet werden kann. Hierbei wird das Gurtband 2 zwischen das freie Ende des Schwenkhebels 4 und die Messeinrichtung 5 eingesteckt und über die Führungen 3 relativ zu der Messfeder 4 und der Messeinrichtung 5 positioniert. Anschließend lässt der Bediener dem Handhebel 8 wieder los und die Messfeder 21 wird über den Antrieb 20 den Schwenkhebel 4 auf das Gurtband 2 drücken. Diese Anpressung des Schwenkhebels 4 erfolgt dabei mit definierter Kraft, die über die Auslegung der Messfeder 21 und eine gegebenenfalls auszuführende Justage vorgegeben wird und sehr gleichmäßig auf das Gurtband 2 aufgebbar ist. Die kraftproportionale Auslenkung des Gurtbandes 2 durch die Wirkung des Schwenkhebels 4 überträgt sich durch den direkte Kontakt der Messeinrichtung 5 mit der Unterseite des Gurtbandes 2 auf den U-förmigen Hebel 31 der Messeinrichtung 5 und über die Übertragungshebel 23 und die Antriebe 24 auf den Zeiger 7, der sich schwenkend relativ zu der Skala 6 verdreht In diesem Zustand, in dem der Bediener die Vorrichtung 1 ggf. lediglich gewichtsmäßig abstützt oder die Vorrichtung 1 sogar durch die Messkräfte selbsttätig an dem Gurtband 2 gehalten ist, herrschen sehr definierte Kraftverhältnisse zwischen Vorrichtung 1 und Gurtband 2, so dass sich ein recht genauer Messwert für die der kraftproportionalen Auslenkung entsprechende Gurtkraft des Gurtbandes 2 ermitteln lässt. Der Bediener kann diese Spannkraft an der Skala 6 ablesen, wobei die Skala 6 wie in Figur 6 noch näher erläutert vorteilhaft mit farbig oder auf sonstige Weise gekennzeichneten Abschnitten unterteilt ist, die den Grenzwerten der zulässigen Spannkraft des Gurtbandes 2 entsprechen. Nach dem Ablesen dieses Wertes für die vorliegende Spannkraft des Gurtbandes 2 betätigt der Bediener wiederum den Handhebel 8 und löst dadurch die Anpressung des Schwenkhebels 4 an dem Gurtband 2, so dass das Gurtband 2 wieder von der Vorrichtung 1 entfernt werden kann. Hierbei stellt die Rückstellfeder 22 auch die Messeinrichtung 5 und damit den Zeiger 7 in ihre unbelasteten Ausgangsstellungen zurück.

Durch die zangenartige Ausbildung der Vorrichtung 1 und die einseitig hervor stehenden und recht klein bauenden Bauteile Schwenkhebel 4 und Messeinrichtung 5 sowie die Führungseinheit 17 kann die Vorrichtung 1 auch dann günstig eingesetzt werden, wenn die Platzverhältnisse zum Messen der Spannkraft des Gurtbandes 2 ungünstig sind. Die Vorrichtung 1 greift dann seitlich um das Gurtband 2 herum, wobei die groß bauenden Teile der Vorrichtung 1 seitlich des Gurtbandes 2 zu liegen kommen und daher nicht in die eigentliche Meßzone eingebracht werden müssen. Hierdurch wird die Benutzung der erfindungsgemäßen Vorrichtung 1 vereinfacht und universeller gestaltet. Zudem ist eine Einhandbedienung der erfindungsgemäßen Vorrichtung 1 möglich, die zudem durch eine Kraftübersetzung in dem Antrieb 20 unterstützt und vereinfacht werden kann.

Das Gehäuse 9 der Vorrichtung 1 ist hierbei im wesentlichen zweiteilig aus ebenen Bauteilen etwa in Form von Blechen zusammen gesetzt, die durch Niete 11 voneinander beabstandet aneinander gehalten sind und zwischen sich die wesentlichen bewegbaren Teile der Vorrichtung 1 aufnehmen und weitgehend kapselnd schützen. Damit ist zum einen ein einfacher Aufbau und eine einfache Montage der Vorrichtung 1 gewährleistet, zum anderen ist die Vorrichtung 1 gegenüber dem rauen Betrieb im Transportgewerbe geschützt und kann nicht so leicht beschädigt werden. Lediglich der freie Endbereichs des Schwenkhebels 4 sowie die Führungseinheit 17 mit den daran angeordneten Einzelzeilen liegen zum Umgreifen des Gurtbandes 2 frei. Hierbei ist die Messeinrichtung 5 wiederum durch die Stege 16 und die Versteifungen 27 umgeben und ebenfalls in Grenzen geschützt.

Wie insbesondere aus der Figur 5 zu entnehmen ist, kann die Führungseinheit 17 mit ihren daran angeordneten Einzelzeilen wie den Führungen 3 von dem Rest der Vorrichtung 1 abgenommen werden, indem die Verschraubung 15 von einem entsprechenden Gewinde 32 an dem Rest der Vorrichtung 1 gelöst und die Führungseinheit 17 mit dem Fenster 28 von dem Vorsprung 29 des Gehäuses 9 nach vorne abgezogen wird. Eine Montage der Führungseinheit 17 erfolgt in umgekehrter Weise. Hierdurch kann die quer zu der Haupterstreckung der im Wesentlichen ebenen Vorrichtung 1 sich erstreckende Führungseinheit 17 komplett vom Rest der Vorrichtung 1 entfernt werden und beispielsweise in einer Tasche oder einem Kasten gelagert werden, ohne dass das Packmaß der Vorrichtung 1 insgesamt stark erhöht würde. Denkbar ist statt eines Gewindes 32 und einer Verschraubung 15 auch die Ausbildung der Verbindung in Form eines Bajonetts denkbar. Sinnvoll ist auf jeden Fall eine unverlierbare Gestaltung der Verschraubung 15, so dass diese sich nicht von der Führungseinheit 17 lösen lässt und dadurch auch nicht unbeabsichtigt verloren gehen kann.

In der Figur 6 ist eine denkbare Ausgestaltung einer Anzeige mittels Skala 6 und Zeiger 7 für verschiedene Breiten eines Gurtbandes 2 zu erkennen. Abhängig von der jeweils vorliegenden Gurtbandbreite, hier z.B. die Gurtbandbreiten 35 mm, 50 mm und 75 mm, werden die gemessenen Spannkräfte auf der gemeinsamen Skala 6 angezeigt, aber auf verschiedenen Skalierungen 33 abgelesen. Die zueinander versetzten, in jeder Skalierung 33 etwa farbig oder auf sonstige Weise optisch auffällig hervorgehobenen Bereiche 34 der Skalierung 33 geben dabei die jeweils zulässigen und beim Verspannen eines Gutes erforderlichen Spannkräfte für die jeweiligen Breiten des Spanngurtes 2 an und machen die Einhaltung der zulässigen Bereiche 34 der Spannkraft für den Bediener einfach kontrollierbar.

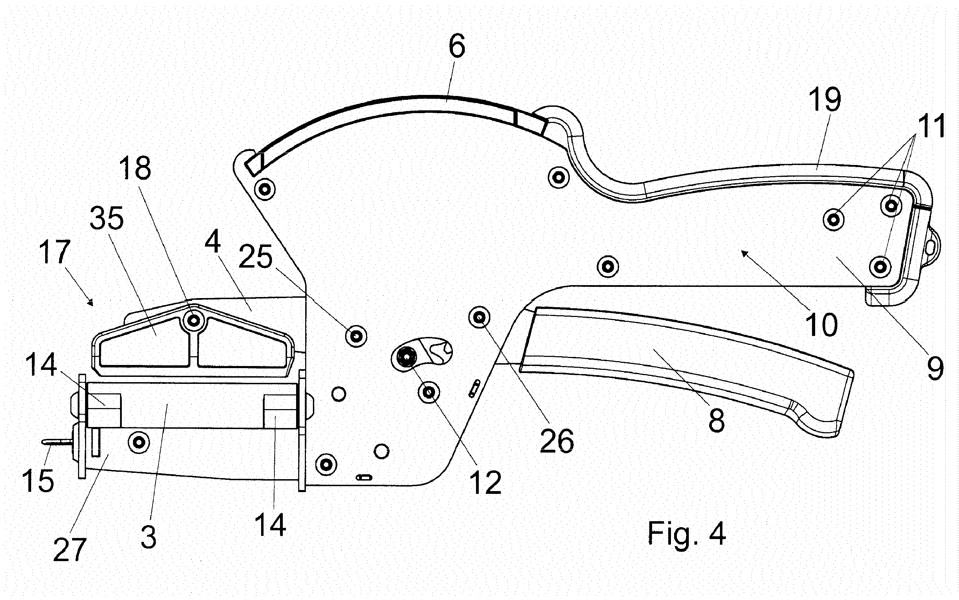

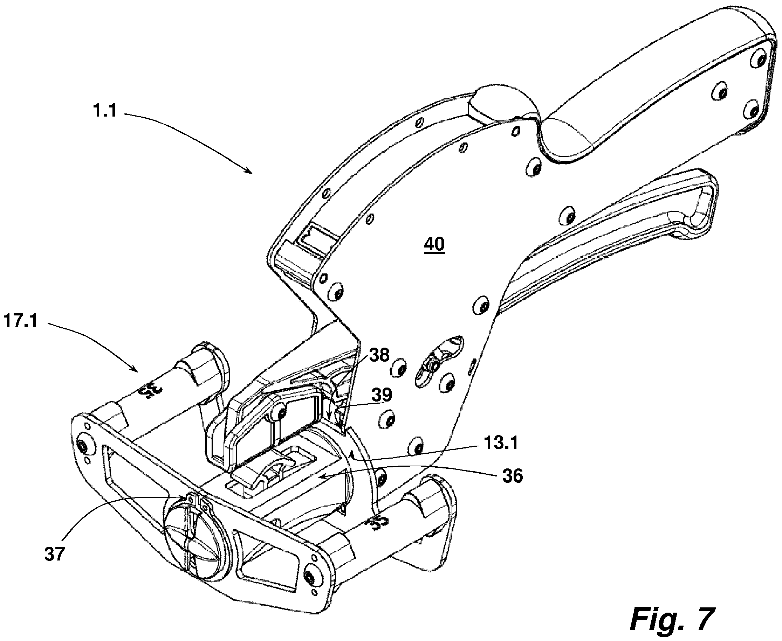

Figur 7 zeigt eine weitere Vorrichtung 1.1 zur Prüfung der Spannkraft eines gespannten Gurtbandes. Die Vorrichtung 1.1 ist prinzipiell aufgebaut wie die zu den Figuren 1 bis 6 beschriebene Vorrichtung 1. Daher gelten die diesbezüglichen Ausführungen zu der Vorrichtung 1 ebenfalls für die Vorrichtung 1.1, soweit dieses nachfolgend nicht anders beschrieben ist.

Die Vorrichtung 1.1 unterscheidet sich von der Vorrichtung 1 dadurch, dass die Führungseinheit 17.1 im Zuge der normalen Benutzung dauerhaft mit den übrigen Bestandteilen der Vorrichtung 1.1 verbunden bleibt. Bei der Vorrichtung 1 konnte die Führungseinheit 17 durch Lösen der Verschraubung 15 abgenommen werden, um ein Verstauen der Vorrichtung zu vereinfachen.

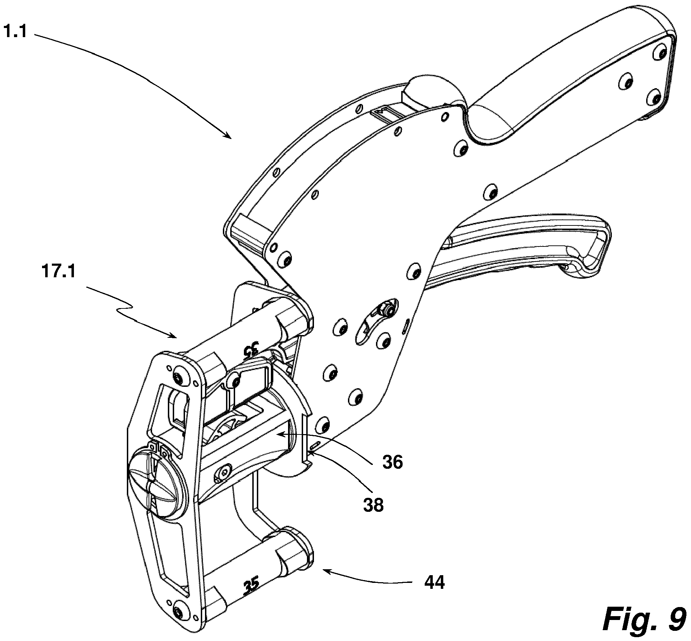

Bei der Vorrichtung 1.1 ist vorgesehen, dass die Führungseinheit 17.1 auf einer axial verschiebbaren Lagerhülse 36 sitzt, durch die die Führungseinheit 17.1 aus ihrer in Figur 7 gezeigten arretierten Benutzungsstellung in eine Nichtgebrauchsstellung verschwenkt werden kann (siehe Figur 9). Auf der Lagehülse 36 ist die Führungseinheit 17.1 mittels eines Sicherungsringes 37 gehalten. Zur Arretierung der in Figur 7 gezeigten Benutzungsstellung der Führungseinheit 17.1 verfügt der hintere Steg 13.1 über eine Ausklinkung 38, in die jeweils ein Vorsprung 39 jeder Gehäuseschale 40 eingreift. Die Lagerhülse 36 wird in der in Figur 7 gezeigten Benutzungsstellung der Führungseinheit 17.1 durch die Kraft einer Zugfeder gehalten. Gegen die Kraft der Zugfeder kann die Führungseinheit 17.1 mit ihrer Lagerhülse 36 von den Vorsprüngen 39 weggezogen und anschließend in die in Figur 9 gezeigte Nichtgebrauchsstellung gedreht werden.

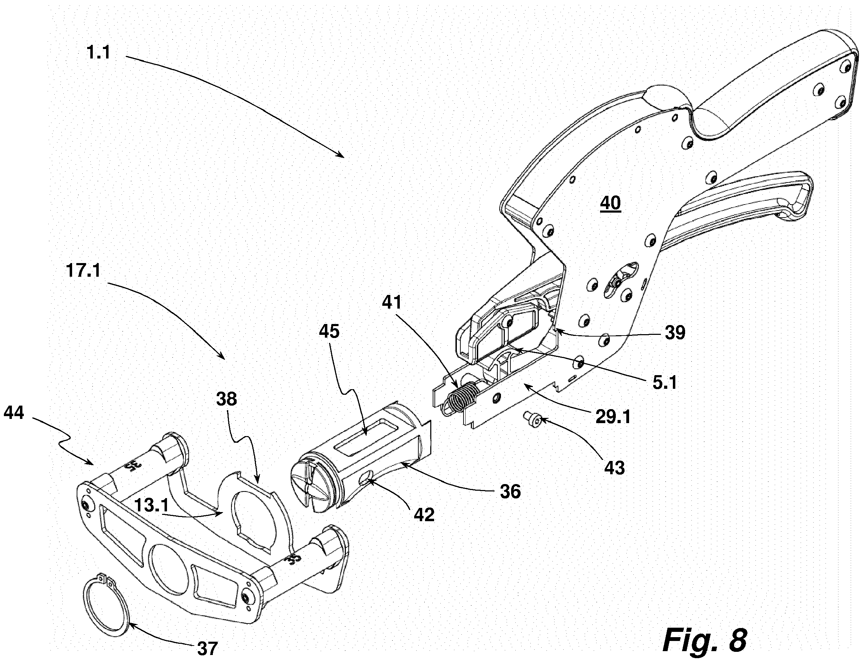

Die Ausbildung der Führungseinheit 17.1 mit den vorbeschriebenen Elementen ist der Explosionsdarstellung der Figur 8 entnehmbar. Die Zugfeder ist darin mit dem Bezugszeichen 41 gekennzeichnet. Die Lagerhülse 36 ist an einem Vorsprung 29.1 einer Gehäuseschale 40 mittels einer ein axial ausgerichtetes Langloch 42 durchgreifenden Befestigungsschraube 43 gehalten. Dieses macht deutlich, dass die Lagerhülse 36 nur in axialer Richtung bewegbar ist, während der übrige Teil der Führungseinheit 17.1 ― der Gurtauflageschlitten 44 ― um die Lagerhülse 36 gedreht werden kann.

Die Lagerhülse 36 weist oberseitig eine Durchbrechung 45 auf. Diese ist erforderlich, damit die Messeinrichtung 5.1 diese durchgreifen kann.

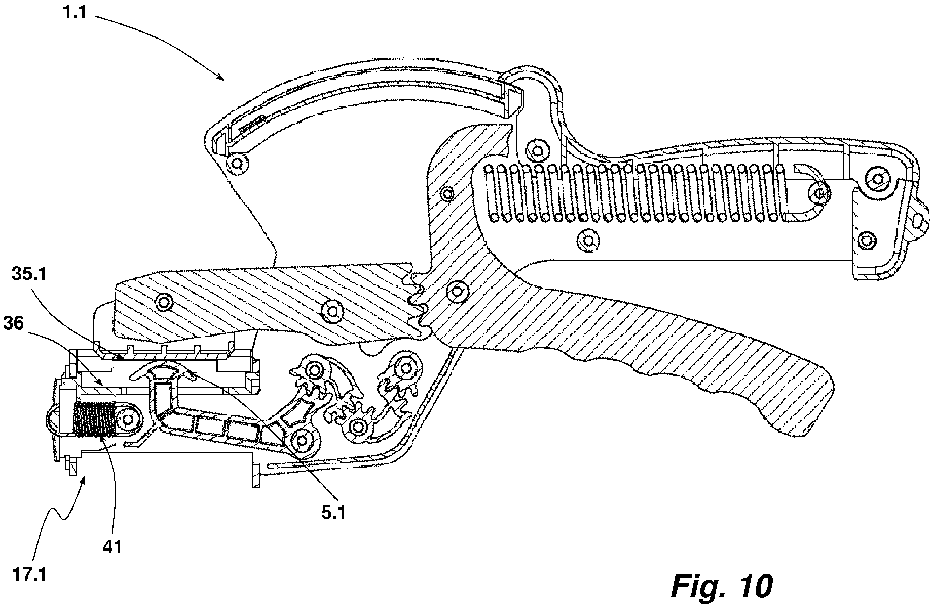

Die Anordnung der vorbeschriebenen Einzelteile der Führungseinheit 17.1 ergibt sich auch aus der Längsschnittdarstellung der Vorrichtung 1.1 in Figur 10.

Die vorstehende Beschreibung der Vorrichtung 1.1 mit ihrer verschwenkbaren Führungseinheit 17.1 macht deutlich, dass die für die Gurtspannungsmessung mit diesem in Kontakt zu bringenden Teile ― die Messeinrichtung 5.1 sowie der ambossartige Anschlag 35.1 ― hinsichtlich ihrer Anordnung und ihrer Funktionsweise gegenüber derjenigen der Vorrichtung 1 unverändert sind.

**Bezugszeichenliste**

| | | | |
|---|---|---|---|
| 1, 1.1 | Vorrichtung | 36 | Lagerhülse |
| 2 | Gurtband | 37 | Sicherungsring |
| 3 | Führung | 38 | Ausklinkung |
| 4 | Schwenkhebel | 39 | Vorsprung |
| 5, 5.1 | Messeinrichtung | 40 | Gehäuseschale |
| 6 | Skala | 41 | Zugfeder |
| 7 | Zeiger | 42 | Langloch |
| 8 | Handhebel | 43 | Befestigungsschraube |
| 9 | Gehäuse | 44 | Gurtauflageschlitten |
| 10 | 1zangenartiger Abschnitt | 45 | Durchbrechung |
| 11 | Niet | | |
| 12 | Einstellschraube | | |
| 13, 13.1 | Steg | | |
| 14 | Anschlag | | |
| 15 | Verschraubung | | |
| 16 | Steg | | |
| 17, 17.1 | Führungseinheit | | |
| 18 | Einstellachse | | |
| 19 | Abdeckung | | |
| 20 | Antrieb | | |
| 21 | Messfeder Schwenkhebel | | |
| 22 | Rückstellfeder | | |
| 23 | Übertragungshebel | | |
| 24 | Zahntrieb | | |
| 25 | Lagerung Schwenkhebel | | |
| 26 | Lagerung Handhebel | | |
| 27 | Versteifung | | |
| 28 | Fenster | | |
| 29 | Vorsprung | | |
| 30 | Drehlagerung | | |
| 31 | U-förmiger Hebel | | |
| 32 | Gewinde | | |
| 33 | Skalierung | | |
| 34 | zulässiger Bereich | | |
| 35, 35.1 | ambossförmiger Anschlag | | |

## Patentansprüche

1. Vorrichtung (1; 1.1) zur Prüfung der Spannkraft eines Gurtbandes (2), insbesondere eines flachen Zurrgurtes, aufweisend quer zur Längsachse des Gurtbandes (2) angeordnete, zueinander beabstandete Führungen (3) für eine Auflage des Gurtbandes (2) während der Prüfung, ein zwischen den Führungen (3) angeordnetes, durch eine Prüfkraft für die Zwecke einer Gurtspannungsprüfung beaufschlagtes Auslenkelement (4) zum Erzeugen einer kraftproportionalen Auslenkung des Gurtbandes (2) aus seiner vor der Prüfung gestreckten Konfiguration und eine Messeinrichtung (5; 5.1), die die erzeugte kraftproportionale Auslenkung erfasst und die Auslenkung oder einen daraus abgeleiteten Kraft- und/oder Spannungswert des Gurtbandes (2) anzeigt, **dadurch gekennzeichnet, dass** das Auslenkelement (4) als Schwenkhebel ausgebildet ist, der von einer Verstelleinrichtung (8, 20) aus seiner Ausgangslage derart verstellbar ist, dass er das Gurtband (2) einseitig belastet und eine kraftproportionale Auslenkung des Gurtbandes (2) erzeugt, und gegenüberliegend zu dem Schwenkhebel (4) eine Messeinrichtung (5; 5.1) angeordnet ist, die auf der zu der Anlage des Schwenkhebels (4) gegenüberliegenden Seite an dem Gurtband (2) anliegt und das Maß der kraftproportionalen Auslenkung erfasst und an eine mit ihr gekoppelte Anzeigevorrichtung (6, 7) weiter leitet.

2. Vorrichtung gemäß Anspruch 1, **dadurch gekennzeichnet, dass** der Schwenkhebel (4) bei der Prüfung das Gurtband (2) über die Verstelleinrichtung (8, 20) mit der Kraft einer Messfeder (21) als Prüfkraft definiert belastet und die kraftproportionale Auslenkung des Gurtbandes (2) über die Federkraft der Messfeder (21) vorgebbar ist.

3. Vorrichtung gemäß Anspruch 2, **dadurch gekennzeichnet, dass** die Messfeder (21) justierbar in Bezug auf eine definierte Vorspannung innerhalb der Vorrichtung (1; 1.1) angeordnet ist.

4. Vorrichtung gemäß einem der vorstehenden Ansprüche, **dadurch gekennzeichnet, dass** der Schwenkhebel (4) über einen Handhebel (8) der Verstelleinrichtung (8, 20) aus der von der Messfeder (21) betätigten, das Gurtband (2) auslenkenden Stellung in eine neutrale Ausgangsstellung zurückholbar ist.

5. Vorrichtung gemäß einem der vorstehenden Ansprüche, **dadurch gekennzeichnet, dass** die Vorrichtung (1; 1.1) beim Einlegen des Gurtbandes (2) mit dem Handhebel (8) öffenbar und, vorzugsweise in geöffneter Stellung verriegelbar, ist und sich bei Prüfung unter der Wirkung der Messfeder (21) schließt.

6. Vorrichtung gemäß einem der vorstehenden Ansprüche, **dadurch gekennzeichnet, dass** die das Gurtband (2) gegenüberliegend berührende Anordnung von schwenkbarer Messeinrichtung (5; 5.1) und Schwenkhebel (4) den Einfluss unterschiedlicher Gurtdicken kompensiert.

7. Vorrichtung gemäß einem der vorstehenden Ansprüche, **dadurch gekennzeichnet, dass** der Schwenkhebel (4) eine selbsteinstellende Auflage (35; 35.1) an dem Gurtband (2) aufweist, vorzugsweise einen drehbar an dem Schwenkhebel (4) gelagerten und sich an die Auflagefläche des Gurtbandes (2) ausrichtenden Amboss.

8. Vorrichtung gemäß einem der vorstehenden Ansprüche, **dadurch gekennzeichnet, dass** Handhebel (8) und Gehäuse (9) der Vorrichtung (1; 1.1) eine zangenartig zueinander verstellbare Anordnung bilden und die Vorrichtung (1; 1.1) bei der Prüfung mit einer Hand betätigbar ist.

9. Vorrichtung gemäß Anspruch 8, **dadurch gekennzeichnet, dass** die Vorrichtung (1; 1.1) beim Öffnen mit dem Handhebel (8) kraft-übersetzt betätigbar ist.

10. Vorrichtung gemäß einem der vorstehenden Ansprüche, **dadurch gekennzeichnet, dass** die Messeinrichtung (5; 5.1) ebenfalls schwenkbar ausgebildet ist und über eine Rückstellfeder (22) in eine Ausgangslage rückstellbar ist.

11. Vorrichtung gemäß einem der vorstehenden Ansprüche, **dadurch gekennzeichnet, dass** die Messeinrichtung (5; 5.1) die erfasste Auslenkung über eine Anzeigemechanik (23, 24, 7), vorzugsweise über Schwenkhebel, weiterleitet, wobei vorzugsweise mindestens eine Übersetzung zur Vergrößerung der Anzeigeempfindlichkeit vorgesehen ist.

12. Vorrichtung gemäß Anspruch 11, **dadurch gekennzeichnet, dass** die Anzeigemechanik (23, 24, 7) eine Skala (6) und einen Zeiger (7), vorzugsweise einen Schleppzeiger aufweist, die die erfasste **spannungsproportionale** Auslenkung des Gurtbandes (2) als Kraftwert, vorzugsweise auf einer Skala (6) mit Anzeigefeldern (33, 34) für zulässige und unzulässige Belastungen des Gurtbandes (2) anzeigen.

13. Vorrichtung gemäß einem der vorstehenden Ansprüche, **dadurch gekennzeichnet, dass** die Führungen (3) zur Auflage des Gurtbandes (2) als relativ zum Gurtband (2) verdrehbare Bolzen mit jeweils definierten Anlageflächen für verschiedene Gurtbreiten ausgebildet sind.

14. Vorrichtung gemäß einem der vorstehenden Ansprüche, **dadurch gekennzeichnet, dass** die Führungen (3) in einer von der Vorrichtung (1; 1.1) abnehmbaren Führungseinheit (17; 17.1) gehaltert sind.

15. Vorrichtung nach einem der Ansprüche 1 bis 13, **dadurch gekennzeichnet, dass** die Führungseinheit (17.1) auf einer Lagerhülse (36) sitzt und gegenüber der Lagerhülse (36) aus einer arretierten Benutzungsstellung in eine Nichtbenutzungsstellung verschwenkbar ist.
